# EUROPEAN PATENT SPECIFICATION

(11) **EP 4 286 227 B1**
(45) Date of publication and mention of the grant of the patent: **02.09.2026**
(21) Application number: 23758201.0
(22) Date of filing: 14.02.2023
(51) Int. Cl.: B60T 7/12

(54) **AUTOMATIC PARKING FUNCTION CONTROL METHOD AND APPARATUS, DEVICE AND READABLE STORAGE MEDIUM**
VERFAHREN UND VORRICHTUNG ZUR AUTOMATISCHEN PARKFUNKTIONSSTEUERUNG, VORRICHTUNG UND LESBARES SPEICHERMEDIUM
PROCÉDÉ, APPAREIL ET DISPOSITIF DE COMMANDE DE FONCTION DE STATIONNEMENT AUTOMATIQUE, ET SUPPORT DE STOCKAGE LISIBLE

(30) Priority: 16.03.2022 CN 202210261849
(43) Date of publication of application: 06.12.2023
(73) Proprietor: Voyah Automobile Technology Company Ltd., Hanyang District Wuhan City, Hubei 430050 (CN)
(72) Inventor: CAO, Yuankang, Wuhan Hubei 430050 (CN); FU, Bin, Wuhan Hubei 430050 (CN); ZHAI, Runguo, Wuhan Hubei 430050 (CN); PEI, Jinshun, Wuhan Hubei 430050 (CN); CAO, An, Wuhan Hubei 430050 (CN); WU, Wei, Wuhan Hubei 430050 (CN); DONG, Wei, Wuhan Hubei 430050 (CN); YANG, Yang, Wuhan Hubei 430050 (CN); ZHOU, Yongliang, Wuhan Hubei 430050 (CN); LIU, Bin, Wuhan Hubei 430050 (CN)
(74) Representative: Maccalli, Marco
(86) International application number: PCT/CN2023/075942
(87) International publication number: WO 2023/173982

(56) References cited:
- CN-A- 109 910 843
- CN-A- 110 194 170
- CN-A- 110 281 889
- CN-A- 111 422 173
- CN-A- 112 959 988
- CN-A- 113 815 585
- CN-A- 114 633 730
- JP-A- H09 136 623
- US-A- 5 575 542

## Description

### TECHNICAL FIELD

The present invention relates to a technical field of vehicle control, and in particular to a method, device, apparatus and readable storage medium for controlling automatic parking function.

### BACKGROUND

In the present invention, during a travelling process of a vehicle, especially when the vehicle is travelling on urban roads, the vehicle is often required to stop and wait uninterruptedly. For example, when a red light at a traffic intersection is on, the vehicle is required to stop and wait. For a driver, he/she needs to press a brake pedal all the time when the vehicle stops, which is time-consuming and labor-intensive, resulting in a poor user experience.

In order to improve a driving experience, the Chinese invention patent application No. 201711329614.4 discloses an automatic parking method, which activates an automatic parking system by braking the brake pedal twice. Specifically, after the brake pedal is braked, if a physical variable (a force applied to the brake pedal, a braking pressure or a stroke of the brake pedal) increments within a first predetermined time by an amount, which is greater than a set threshold, then the automatic parking system is activated. However, since this threshold is constant, it may be difficult to meet the conditions for activating the automatic parking system when this threshold is set too large, thereby resulting in an inability to active the automatic parking system. When this threshold is set too small, the automatic parking system is caused to be easy to be activated by mistake.

In the related art, there is found CN 109910843 A document (D1), published on June 21, 2019, which describes a method and apparatus for automatically parking a vehicle. In D1, the automatic parking method is for preventing a stationary vehicle from skidding, wherein actuation of a brake pedal causes at least one braking component of the vehicle to be activated and hold the vehicle at a standstill, and wherein a physical variable representative of the actuation of the brake pedal is detected, and the at least one braking component of the vehicle is kept activated if an increment of the physical variable during a first predetermined time is greater than a set threshold; wherein the set threshold is a constant value.

### SUMMARY

The main purpose of the present invention is to provide a method, device, apparatus and readable storage medium for controlling automatic parking function. The problem that an activating way of the automatic parking system cannot precisely match user needs in the prior art is solved by using one or more embodiments of the present invention.

**In** a first aspect, a method for controlling automatic parking function is provided by the present invention. The method for controlling automatic parking function includes: recording a stationary moment of vehicle when a vehicle is stationary based on a braking action; recording a recurrence moment of braking action, in the case that a braking pressure is kept above a preset braking pressure, when the braking action is detected again; determining an activation threshold according to a time difference between the recurrence moment of braking action and the stationary moment of vehicle, the time difference being inversely proportional to the activation threshold; and then activating an automatic parking function, when it is detected that an increment of a braking physical quantity is greater than the activation threshold within a preset duration.

**In** a second aspect, a device for controlling automatic parking function is provided by the present invention. The device for controlling automatic parking function includes: a recording module, configured for recording a stationary moment of vehicle when a vehicle is stationary based on a braking action; recording a recurrence moment of braking action, when the braking action is detected again in the case that a braking pressure is kept above a preset braking pressure; a determining module, configured for determining an activation threshold according to a time difference between the recurrence moment of braking action and the stationary moment of vehicle, the time difference being inversely proportional to the activation threshold; a control module, configured for activating an automatic parking function, when it is detected that an increment of a braking physical quantity is greater than the activation threshold within a preset duration.

In a third aspect, an apparatus for controlling automatic parking function is also provided by the present invention. The apparatus for controlling automatic parking function includes a device according to the second aspect, a processor, a memory, and a program for controlling automatic parking function stored on the memory and executable by the processor, where the program for controlling automatic parking function, when executed by a processor, implements the steps of the above-mentioned method for controlling automatic parking function

In a fourth aspect, a readable storage medium, on which a program for controlling automatic parking function is stored is also provided by the present invention, where the program for controlling automatic parking function, when executed by a processor, implements the steps of the above-mentioned method for controlling automatic parking function.

### BRIEF DESCRIPTION OF DRAWINGS

FIG. 1 shows an exemplary hardware structural diagram of an apparatus for controlling automatic parking function according to some embodiments of the present invention.
FIG. 2 shows an exemplary flow chart of a method for controlling automatic parking function according to some embodiments of the present invention.
FIG. 3 shows an exemplary relational diagram of an activation threshold G and a time difference △t in FIG. 2.
FIG. 4 shows an exemplary change diagram of a braking physical quantity in FIG. 2.
FIG. 5 shows another exemplary change diagram of the braking physical quantity in FIG. 2.
FIG. 6 shows an exemplary flow chart of a method for controlling automatic parking function according to some other embodiments of the present invention.
FIG. 7 shows an exemplary functional module diagram of a device for controlling automatic parking function according to some embodiments of the present invention.

The implementation, functional features and advantages of the disclosure will be described with reference to the accompanying drawings in combination with the embodiments.

### DESCRIPTION OF EMBODIMENTS

It should be understood that embodiments described here are only used to explain the present invention, not to limit the present invention.

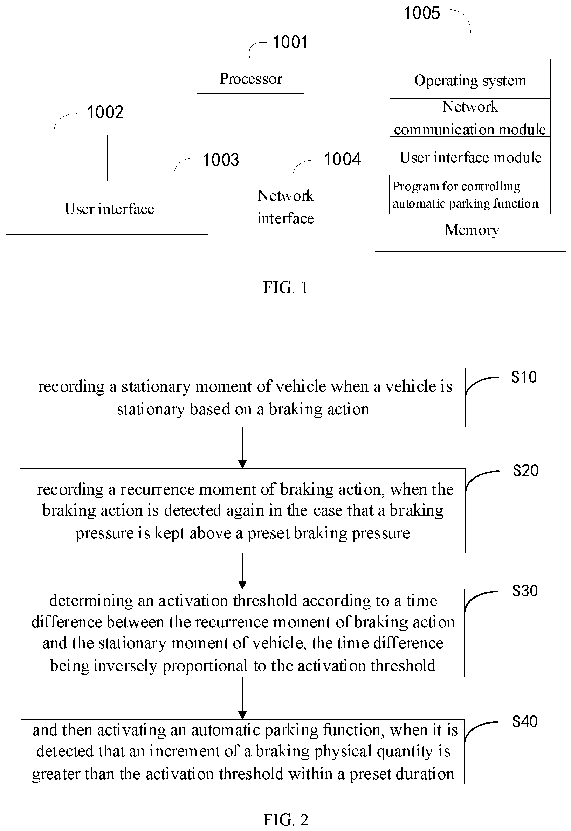

In a first aspect, some embodiments of the present invention provide an apparatus for controlling automatic parking function. Referring to FIG. 1, FIG. 1 shows an exemplary hardware structural diagram of an apparatus for controlling automatic parking function according to some embodiments of the present invention. In the embodiment of the present invention, the apparatus for controlling automatic parking function may include a processor 1001 (such as a Central Processing Unit, CPU ), a communication bus 1002, a user interface 1003, a network interface 1004, and a memory 1005. In some embodiments, the communication bus 1002 is configured to realize a connection and a communication among these components; the user interface 1003 may include a display (Display), an input unit such as a keyboard (Keyboard); the network interface 1004 may optionally include a standard wired interface and a wireless interface (such as Wireless-Fidelity, WI-FI interface); the memory 1005 may be a high-speed random access memory (RAM), or a stable memory (non-volatile memory), such as a disk memory, and the memory 1005 optionally may also be a storage device independent of the above-mentioned processor 1001. Those skilled in the art can understand that a hardware structure shown in FIG. 1 does not limit the present invention, and may include more or less components than illustrated, or some components may be combined, or different components may be arranged.

It is continued to refer to FIG. 1, the memory 1005 as a computer storage medium in FIG. 1 may include an operating system, a network communication module, a user interface module, and a program for controlling automatic parking function therein.

In some embodiments, the processor 1001 may invoke the program for controlling automatic parking function stored in the memory 1005, and perform the following steps: recording a stationary moment of vehicle when a vehicle is stationary based on a braking action; recording a recurrence moment of braking action, when the braking action is detected again in the case that a braking pressure is kept above a preset braking pressure; determining an activation threshold according to a time difference between the recurrence moment of braking action and the stationary moment of vehicle, the time difference being inversely proportional to the activation threshold; and activating an automatic parking function, when it is detected that an increment of a braking physical quantity is greater than the activation threshold within a preset duration.

In some embodiments, the processor 1001 may invoke the program for controlling automatic parking function stored in the memory 1005, and further perform the following steps: deactivating the automatic parking function when a deactivation condition is met.

In some embodiments, the deactivation condition may include that: it is detected that an acceleration physical quantity is greater than a first threshold; or that a braking physical quantity is greater than a second threshold.

In some embodiments, the acceleration physical quantity may include: a force applied to an accelerator pedal, a stroke of the accelerator pedal, a motor torque or an engine torque.

In some embodiments, the braking physical quantity may include: a force applied to a brake pedal, a stroke of the brake pedal or a braking pressure.

Embodiments of apparatus for controlling automatic parking function of the present invention refer to various embodiments of the method for controlling automatic parking function, which will not be repeated here.

In a second aspect, the embodiments of the present invention provide a method for controlling automatic parking function. Referring to FIG. 2, FIG. 2 shows an exemplary flow chart of a method for controlling automatic parking function according to some embodiments of the present invention. As shown in FIG. 2, the method for controlling automatic parking function may include: Step S10, recording a stationary moment of vehicle when a vehicle is stationary based on a braking action.

In this embodiment, the braking action refers to an action of a driver stepping on a brake pedal, and the braking action at this time is a first braking action. When the vehicle becomes to be stationary based on the action of the driver stepping on the brake pedal, the stationary moment of vehicle is recorded and is denoted as t₀.

The method further includes Step S20, recording a recurrence moment of braking action, when the braking action is detected again in the case that a braking pressure is kept above a preset braking pressure.

In some embodiments, if the braking pressure is always kept above the preset braking pressure after the vehicle is stationary, the recurrence moment of braking action is recorded and is denoted as t₁ when the braking action is detected again. The braking action at this time is a second braking action.

In some embodiments, the preset braking pressure is a minimum braking pressure for parking. The vehicle can be kept stationary only when the braking pressure is above the preset braking pressure. The minimum braking pressure for parking can be determined according to conditions of a road surface and the vehicle.

The driver keeps the braking pressure always above the preset braking pressure by stepping on the brake pedal, indicating that the driver wants the vehicle to remain stationary state. Only when the braking action is detected again in this case, the recurrence moment of braking action is recorded and is denoted as t₁.

It is indicated that the driver has given up keeping the vehicle stationary and a true intention of the driver is to re-enter the vehicle into a motion state, if it is detected that the braking pressure is less than the preset braking pressure after step S10. After this, if the braking action is detected again, the recurrence moment of braking action is not recorded, but when the vehicle is stationary based on the braking action, the stationary moment of vehicle is recorded, that is the method for controlling automatic parking function is restarted.

The method further includes step S30, determining an activation threshold according to a time difference between the recurrence moment of braking action and the stationary moment of vehicle, the time difference being inversely proportional to the activation threshold.

In some embodiments, the time difference between the recurrence moment of braking action and the stationary moment of vehicle is calculated, i.e. the time difference △t=t₁ -t₀, then the activation threshold G is determined according to the time difference. In some embodiments, a function of G=f (Δt) may be defined in advance, and the time difference is inversely proportional to the activation threshold, that is, a value of G decreases with the increase of △t. There is no restriction on the function of G=f (Δt), and it can be set according to actual needs when the above constraints are met.

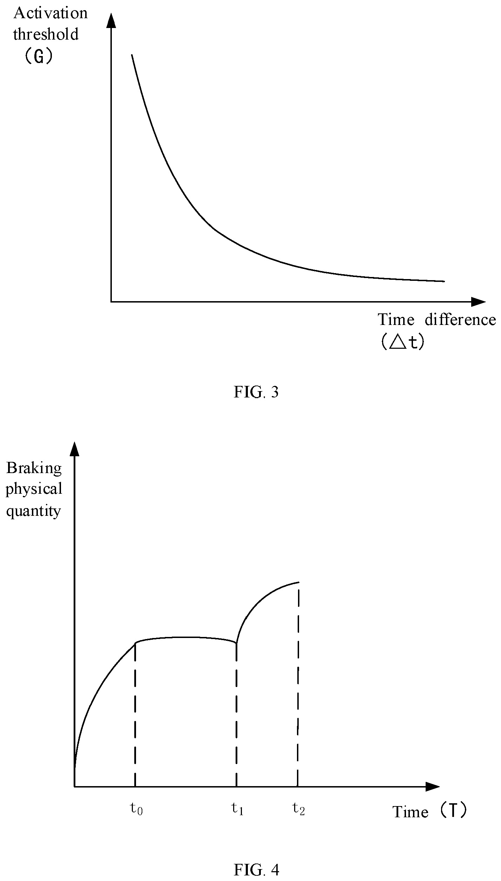

Referring to FIG. 3, FIG. 3 shows an exemplary relational diagram of an activation threshold G and a time difference △t in FIG. 2. As shown in Figure 3, the value of G decreases with the increase of Δt.

The method further includes Step S40, activating an automatic parking function when it is detected that an increment of a braking physical quantity is greater than the activation threshold within a preset duration.

In this embodiment, the preset duration refers to a duration of t₁ ~ t₂, and the preset duration is set according to actual needs, for example, it is set to 2s. It is easy to understand that, here is only a schematic illustration of the preset duration, and does not constitute a limitation on the preset duration.

At moment t₁, it is detected that the braking action occurs again, and this braking action will cause the braking physical quantity to increase. if the increment of the braking physical quantity is greater than the activation threshold within a preset duration, then the automatic parking function is activated. In some embodiments, the braking physical quantity may be any one of the force applied to a brake pedal, the stroke of the brake pedal, or the braking pressure.

Referring to FIG. 4, FIG. 4 shows an exemplary change diagram of the braking physical quantity in FIG. 2. As shown in FIG. 4, the driver when wanting the vehicle to be stationary, will gradually increase a force of the braking action so that the braking physical quantities will gradually increase until the vehicle stops at moment t₀ based on the braking action. At this time, the driver if wishing to keep the vehicle stationary, will generally maintain the force of the braking action. It is reflected in FIG. 4, that is, the braking physical quantity remains stable. After a period of time, if the driver wants to activate the automatic parking function, then the braking action is performed again. As shown in FIG. 4, it is easy to understand that the driver performs the braking action again on the basis of the first braking action (that is, an action of obviously loosening the brake pedal is not performed). When an execution subject of the method for controlling automatic parking function of the present invention detects that the braking action occurs again at moment t₁, then whether the increment of the braking physical quantity is greater than the activation threshold within the preset duration (i.e. t₁ ~t₂ ) is detected. For example, the braking physical quantity at moment t₁ is denoted as X, and the activation threshold is denoted as G, that is, whether the braking physical quantity is greater than (X+G) within the duration of t₁ ~ t₂ is detected. if it is detected that the increment of the braking physical quantity is greater than the activation threshold within the preset duration, the automatic parking function is activated. In some embodiments, it may be detected that the braking physical quantity is greater than (X+G) at a certain moment within the duration of t₁ ~ t₂, at this time the automatic parking function can be activated.

It should be noted that within a duration from t₀ to the moment that the automatic parking function is activated, the braking pressure is always kept above the preset braking pressure.

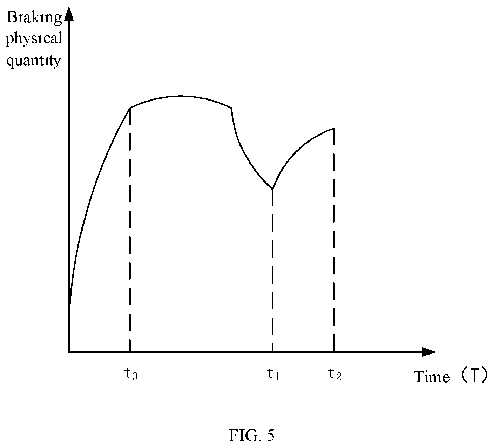

Referring to FIG. 5, FIG. 5 shows another exemplary change diagram of the braking physical quantity in FIG. 2. As shown in FIG. 5, the driver when wanting the vehicle to be stationary, will gradually increase a force of the braking action so that the braking physical quantities will gradually increase until the vehicle stops at moment t₀ based on the braking action. At this time, the driver if wishing to keep the vehicle stationary, will generally maintain the force of the braking action. It is reflected in FIG. 5, that is, the braking physical quantity remains stable. After a period of time, if the driver wants to activate the automatic parking function, then the braking action is performed again. As shown in FIG. 5, it is easy to understand that the action of loosening the brake pedal is performed by the driver before the braking action is performed again, thereby the braking physical quantity is caused to fall back, and then the braking action is performed again. When the execution subject of the method for controlling automatic parking function of the present invention detects that the braking action occurs again at moment t₁, then whether the increment of the braking physical quantity is greater than the activation threshold within the preset duration (i.e. t₁ ~t₂ ) is detected. For example, the braking physical quantity at moment t₁ is denoted as X, and the activation threshold is denoted as G, that is, whether the braking physical quantity is greater than (X+G) within the duration of t₁ ~ t₂ is detected. if it is detected that the increment of the braking physical quantity is greater than the activation threshold within the preset duration, the automatic parking function is activated. In some embodiments, it may be detected that the braking physical quantity is greater than (X+G) at a certain moment within the duration of t₁ ~ t₂, at this time the automatic parking function can be activated.

It should be noted that within a duration from t₀ to the moment that ~ the automatic parking function is activated, the braking pressure is always kept above the preset braking pressure.

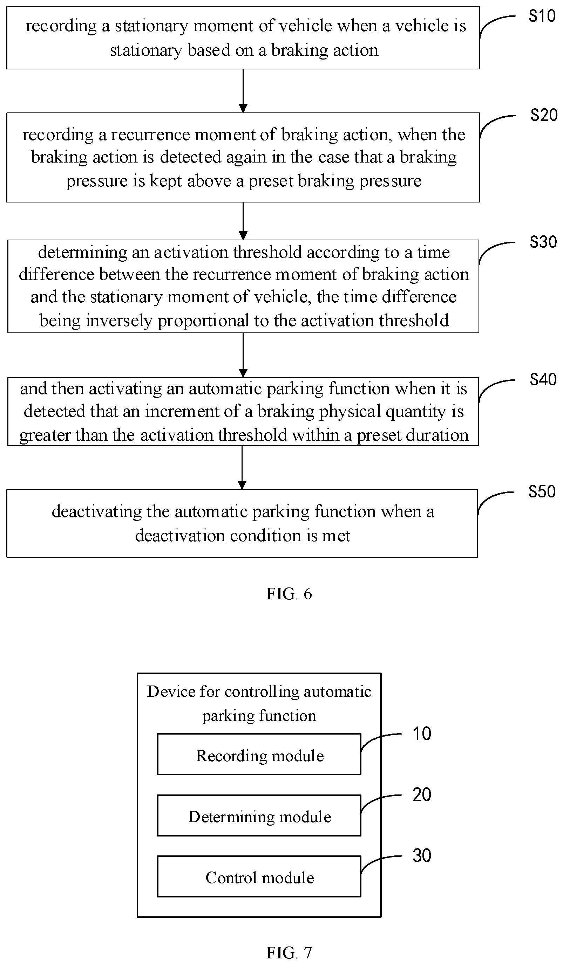

Referring to FIG. 6, Fig. 6 shows an exemplary flow chart of a method for controlling automatic parking function according to some other embodiments of the present invention. In some embodiments, after step S40, the method may further include: Step S50, deactivating the automatic parking function when a deactivation condition is met.

In some embodiments, after the automatic parking function is activated, if it is detected that the deactivation condition is met, the automatic parking function is deactivated. In some embodiments, the deactivation condition can be set according to actual needs, for example, a preset button being triggered, the accelerator pedal being stepped on, and the brake pedal being stepped on, and so on. That is, when it is detected that the preset button is triggered, the accelerator pedal is stepped on or the brake pedal is stepped on, it is determined that the deactivation condition is met, thereby the automatic parking function is deactivated.

In some embodiments, the deactivation condition may include that: it is detected that an acceleration physical quantity is greater than a first threshold; or that a braking physical quantity is greater than a second threshold.

In some embodiments, the acceleration physical quantity may include: the force applied to the accelerator pedal, the stroke of the accelerator pedal, the motor torque or the engine torque.

It is easy to understand that when the acceleration physical quantity is the force applied to the accelerator pedal, a unit of the first threshold is F, and a specific value of the first threshold is set according to actual needs; similarly, when the acceleration physical quantity is the stroke of the accelerator pedal, the unit of the first threshold is cm, and the specific value of the first threshold is set according to actual needs; and when the acceleration physical quantity is the motor torque or the engine torque, the unit of the first threshold is N/m, and the specific value of the first threshold is set according to actual needs.

In some embodiments, the braking physical quantity may include: a force applied to a brake pedal, a stroke of the brake pedal or a braking pressure. It is easy to understand that when the braking physical quantity is the force applied to the brake pedal, a unit of the second threshold is F, and a specific value of the second threshold is set according to actual needs; similarly, when the braking physical quantity is the stroke of the brake pedal, the unit of the second threshold is cm, and the specific value of the second threshold is set according to actual needs; and when the braking physical quantity is the braking pressure, the unit of the second threshold is Pa, and the specific value of the second threshold is set according to actual needs.

In a third aspect, the embodiments of the present invention further provide a device for controlling automatic parking function.

In some embodiments, referring to FIG. 7, Fig. 7 shows an exemplary functional module diagram of a device for controlling automatic parking function according to some embodiments of the present invention. As shown in FIG. 7, the device for controlling automatic parking function may include: a recording module 10, configured for recording a stationary moment of vehicle when a vehicle is stationary based on a braking action; recording a recurrence moment of braking action, when the braking action is detected again in the case that a braking pressure is kept above a preset braking pressure; a determining module 20, configured for determining an activation threshold according to a time difference between the recurrence moment of braking action and the stationary moment of vehicle, the time difference being inversely proportional to the activation threshold; and a control module 30, configured for activating an automatic parking function when it is detected that an increment of a braking physical quantity is greater than the activation threshold within a preset duration.

**In** some embodiments, the control module 30 may also be configured for: deactivating the automatic parking function when a deactivation condition is met.

**In** some embodiments, the deactivation condition may include that: an acceleration physical quantity is greater than a first threshold; or a braking physical quantity is greater than a second threshold.

**In** some embodiments, the acceleration physical quantity may include: a force applied to an accelerator pedal, a stroke of the accelerator pedal, a motor torque or an engine torque.

**In** some embodiments, the braking physical quantity may include: a force applied to a brake pedal, a stroke of the brake pedal or a braking pressure.

**In** some embodiments, implementations of functions of various modules in the above device for controlling automatic parking function correspond respectively to various steps in the embodiments of the above method for controlling automatic parking function embodiment, thus functions and implementing processes of which will not be repeated here.

**In** a fourth aspect, the embodiments of the present invention further provide a readable storage medium.

A program for controlling automatic parking function is stored on the readable storage medium of the present invention, wherein the program for controlling automatic parking function, when executed by a processor, implements the steps of the above-mentioned method for controlling automatic parking function.

**In** some embodiments, when the program for controlling automatic parking function is executed by the processor, the following steps can be implemented: recording a stationary moment of vehicle when a vehicle is stationary based on a braking action; recording a recurrence moment of braking action, when the braking action is detected again in the case that a braking pressure is kept above a preset braking pressure; determining an activation threshold according to a time difference between the recurrence moment of braking action and the stationary moment of vehicle, the time difference being inversely proportional to the activation threshold; and then activating an automatic parking function, when it is detected that an increment of a braking physical quantity is greater than the activation threshold within a preset duration.

**In** some embodiments, when the program for controlling automatic parking function is executed by the processor, the following steps can also be implemented: deactivating the automatic parking function when a deactivation condition is met.

**In** some embodiments, the deactivation condition may include that: it is detected that an acceleration physical quantity is greater than a first threshold; or that a braking physical quantity is greater than a second threshold.

**In** some embodiments, the acceleration physical quantity may include: a force applied to an accelerator pedal, a stroke of the accelerator pedal, a motor torque or an engine torque.

**In** some embodiments, the braking physical quantity may include: a force applied to a brake pedal, a stroke of the brake pedal or a braking pressure.

**In** some embodiments, the method implemented when the program for controlling automatic parking function is executed can refer to the various embodiments of the method for controlling automatic parking function of the present invention, which will not be repeated here.

**In** the present invention, a stationary moment of vehicle is recorded when a vehicle is stationary based on a braking action; a recurrence moment of braking action is recorded when the braking action is detected again in the case that a braking pressure is kept above a preset braking pressure; an activation threshold according to a time difference between the recurrence moment of braking action and the stationary moment of vehicle is determined, the time difference being inversely proportional to the activation threshold; and when it is detected that an increment of a braking physical quantity is greater than the activation threshold within a preset duration, then an automatic parking function is activated. In the present invention, an activation threshold according to a time difference between the recurrence moment of braking action and the stationary moment of vehicle is determined, and the time difference is inversely proportional to the activation threshold. In some embodiments, When the time difference is larger, it is indicated that the brake pedal is stepped on by the driver for a long time. At this time, it is more likely that the automatic parking function needs to be activated, thus the activation threshold is set to be smaller, such that the automatic parking function is easier to be activated. When the time difference is smaller, it is indicated that the brake pedal is stepped on by the driver only for a short time. At this time, it is less likely that the automatic parking function needs to be activated, thus the activation threshold is set to be larger, thereby the automatic parking function is avoided from being activated by mistake. Through the present invention, the control of the automatic parking function is more in line with the actual needs of the driver, thereby the driving experience of the driver is improved.

It should be noted that, as used herein, the term "include", "comprise" or any other variation thereof are intended to cover a non-exclusive inclusion such that a process, method, article or system including a set of elements includes not only those elements, but also includes other elements not expressly listed, or elements inherent in the process, method, article, or system. Without further limitation, the element limited by the statement "includes a ......" does not preclude the presence of other identical elements in the process, method, article, or system including that element.

The serial numbers of the above-mentioned embodiments of the present invention are for description only, and do not represent the advantages and disadvantages of the embodiments.

Through the description of the above embodiments, those skilled in the art can clearly understand that the methods of the above embodiments can be implemented by means of software plus a necessary general-purpose hardware platform, and of course also can be implemented by hardware, but in many cases the former is better embodiment. Based on such an understanding, the technical solution of the present invention can be embodied in the form of a software product in essence or the part that contributes to the prior art, and the computer software product is stored in a storage medium as described above ( such as ROM/RAM, magnetic disk, optical disk), and several instructions are included therein to enable a terminal apparatus to execute the methods described in various embodiments of the present invention.

The above are only preferred embodiments of the present invention, and are not intended to limit the patent scope of the present invention.

## Claims

1. A method for controlling automatic parking function, comprising:
recording (S10) a stationary moment of vehicle when a vehicle is stationary based on a braking action;
recording (S20) a recurrence moment of braking action, when the braking action is detected again in the case that a braking pressure is kept above a preset braking pressure;
determining (S30) an activation threshold according to a time difference between the recurrence moment of braking action and the stationary moment of vehicle, the time difference being inversely proportional to the activation threshold; and
activating (S40) the automatic parking function when it is detected that an increment of a braking physical quantity is greater than the activation threshold within a preset duration.

2. The method for controlling automatic parking function according to claim 1, wherein after the activating the automatic parking function, the method further comprises: deactivating (S50) the automatic parking function when a deactivation condition is met.

3. The method for controlling automatic parking function according to claim 2, wherein the deactivation condition comprises that: it is detected that an acceleration physical quantity is greater than a first threshold; or that a braking physical quantity is greater than a second threshold.

4. The method for controlling automatic parking function according to claim 3, wherein the acceleration physical quantity comprises: a force applied to an accelerator pedal, a stroke of the accelerator pedal, a motor torque or an engine torque.

5. The method for controlling automatic parking function according to claim 1 or 3, wherein the braking physical quantity comprises: a force applied to a brake pedal, a stroke of the brake pedal or a braking pressure.

6. A device for controlling automatic parking function, comprising:
a recording module (10), configured for recording a stationary moment of vehicle when a vehicle is stationary based on a braking action; recording a recurrence moment of braking action, when the braking action is detected again in the case that a braking pressure is kept above a preset braking pressure;
a determining module (20), configured for determining an activation threshold according to a time difference between the recurrence moment of braking action and the stationary moment of vehicle, the time difference being inversely proportional to the activation threshold; and
a control module (30), configured for activating the automatic parking function when it is detected that an increment of a braking physical quantity is greater than the activation threshold within a preset duration.

7. The device for controlling automatic parking function according to claim 6, wherein the control module is further configured for: deactivating the automatic parking function when a deactivation condition is met.

8. The device for controlling automatic parking function according to claim 7, wherein the deactivation condition comprises that: an acceleration physical quantity is greater than a first threshold; or a braking physical quantity is greater than a second threshold.

9. An apparatus for controlling automatic parking function, comprising the device for controlling automatic parking function according to any one of claims 6 to 8, further comprising a processor (1001), a memory (1005), and a program for controlling automatic parking function stored on the memory (1005) and executable by the processor (1001), wherein the program for controlling automatic parking function, when executed by the processor (1001), implements functions of the device for controlling automatic parking function.

10. A readable storage medium, a program for controlling automatic parking function is stored on the readable storage medium, wherein the program for controlling automatic parking function, when executed by a processor (1001), implements the steps of method for controlling automatic parking function according to any one of claims 1 to 5.

## Patentansprüche

1. Verfahren zur automatischen Parkfunktionssteuerung, umfassend:
Aufzeichnen (S10) eines Fahrzeugstillstandszeitpunkts, wenn ein Fahrzeug infolge einer Bremsbetätigung stillsteht;
Aufzeichnen (S20) eines Zeitpunkts der erneuten Bremsbetätigung, wenn die Bremsbetätigung unter der Voraussetzung erneut erfasst wird, dass ein Bremsdruck auf einem Wert oberhalb eines vorgegebenen Bremsdrucks gehalten wird;
Ermitteln (S30) eines Aktivierungsschwellenwerts anhand einer Zeitdifferenz zwischen dem Zeitpunkt der erneuten Bremsbetätigung und dem Fahrzeugstillstandszeitpunkt, wobei die Zeitdifferenz zu dem Aktivierungsschwellenwert umgekehrt proportional ist; und
Aktivieren (S40) der automatischen Parkfunktion, wenn erfasst wird, dass eine Zunahme einer Bremskenngröße innerhalb einer vorgegebenen Zeitdauer größer als der Aktivierungsschwellenwert ist.

2. Verfahren zur automatischen Parkfunktionssteuerung nach Anspruch 1, wobei das Verfahren nach dem Aktivieren der automatischen Parkfunktion ferner umfasst:
Deaktivieren (S50) der automatischen Parkfunktion, wenn eine Deaktivierungsbedingung erfüllt ist.

3. Verfahren zur automatischen Parkfunktionssteuerung nach Anspruch 2, wobei die Deaktivierungsbedingung umfasst, dass erfasst wird, dass eine Beschleunigungskenngröße größer als ein erster Schwellenwert ist oder dass eine Bremskenngröße größer als ein zweiter Schwellenwert ist.

4. Verfahren zur automatischen Parkfunktionssteuerung nach Anspruch 3, wobei die Beschleunigungskenngröße eine auf ein Fahrpedal ausgeübte Kraft, einen Fahrpedalweg, ein Drehmoment eines Elektromotors oder ein Drehmoment eines Verbrennungsmotors umfasst.

5. Verfahren zur automatischen Parkfunktionssteuerung nach Anspruch 1 oder 3, wobei die Bremskenngröße eine auf ein Bremspedal ausgeübte Kraft, einen Bremspedalweg oder einen Bremsdruck umfasst.

6. Vorrichtung zur automatischen Parkfunktionssteuerung, umfassend:
ein Aufzeichnungsmodul (10), das dazu eingerichtet ist, einen Fahrzeugstillstandszeitpunkt aufzuzeichnen, wenn ein Fahrzeug infolge einer Bremsbetätigung stillsteht, und einen Zeitpunkt der erneuten Bremsbetätigung aufzuzeichnen, wenn die Bremsbetätigung unter der Voraussetzung erneut erfasst wird, dass ein Bremsdruck auf einem Wert oberhalb eines vorgegebenen Bremsdrucks gehalten wird;
ein Ermittlungsmodul (20), das dazu eingerichtet ist, anhand einer Zeitdifferenz zwischen dem Zeitpunkt der erneuten Bremsbetätigung und dem Fahrzeugstillstandszeitpunkt einen Aktivierungsschwellenwert zu ermitteln, wobei die Zeitdifferenz zu dem Aktivierungsschwellenwert umgekehrt proportional ist; und
ein Steuermodul (30), das dazu eingerichtet ist, die automatische Parkfunktion zu aktivieren, wenn erfasst wird, dass eine Zunahme einer Bremskenngröße innerhalb einer vorgegebenen Zeitdauer größer als der Aktivierungsschwellenwert ist.

7. Vorrichtung zur automatischen Parkfunktionssteuerung nach Anspruch 6, wobei das Steuermodul ferner dazu eingerichtet ist, die automatische Parkfunktion zu deaktivieren, wenn eine Deaktivierungsbedingung erfüllt ist.

8. Vorrichtung zur automatischen Parkfunktionssteuerung nach Anspruch 7, wobei die Deaktivierungsbedingung umfasst, dass eine Beschleunigungskenngröße größer als ein erster Schwellenwert ist oder dass eine Bremskenngröße größer als ein zweiter Schwellenwert ist.

9. Vorrichtung zur automatischen Parkfunktionssteuerung, umfassend die Vorrichtung zur automatischen Parkfunktionssteuerung nach einem der Ansprüche 6 bis 8 und ferner umfassend einen Prozessor (1001), einen Speicher (1005) sowie ein in dem Speicher (1005) gespeichertes und durch den Prozessor (1001) ausführbares Programm zur automatischen Parkfunktionssteuerung, wobei das Programm zur automatischen Parkfunktionssteuerung bei Ausführung durch den Prozessor (1001) die Funktionen der Vorrichtung zur automatischen Parkfunktionssteuerung verwirklicht.

10. Lesbares Speichermedium, auf dem ein Programm zur automatischen Parkfunktionssteuerung gespeichert ist, wobei das Programm zur automatischen Parkfunktionssteuerung bei Ausführung durch einen Prozessor (1001) die Schritte des Verfahrens zur automatischen Parkfunktionssteuerung nach einem der Ansprüche 1 bis 5 ausführt.

## Revendications

1. Procédé de commande de la fonction de stationnement automatique, comprenant : enregistrement (S10) d'un moment stationnaire du véhicule lorsque le véhicule est stationnaire basé sur une action de freinage ;
enregistrement (S20) d'un moment de récurrence de l'action de freinage, lorsque l'action de freinage est détectée à nouveau dans le cas où une pression de freinage est maintenue au-dessus d'une pression de freinage prédéfinie ;
détermination (S30) d'un seuil d'activation selon une différence de temps entre le moment de récurrence de l'action de freinage et le moment stationnaire du véhicule, la différence de temps étant inversement proportionnelle au seuil d'activation ; et
activation (S40) de la fonction de stationnement automatique lorsqu'il est détecté qu'un incrément d'une quantité physique de freinage est supérieur au seuil d'activation dans une durée prédéfinie.

2. Procédé de commande de la fonction de stationnement automatique selon la revendication 1, dans lequel, après l'activation de la fonction de stationnement automatique, le procédé comprend également : désactivation (S50) de la fonction de stationnement automatique lorsqu'une condition de désactivation est remplie.

3. Procédé de commande de la fonction de stationnement automatique selon la revendication 2, dans lequel la condition de désactivation comprend que : il est détecté qu'une quantité physique d'accélération est supérieure à un premier seuil ; ou qu'une quantité physique de freinage est supérieure à un deuxième seuil.

4. Procédé de commande de la fonction de stationnement automatique selon la revendication 3, dans lequel la quantité physique de l'accélération comprend : une force appliquée à une pédale d'accélérateur, une course de la pédale d'accélérateur ou un couple moteur.

5. Procédé de commande de la fonction de stationnement automatique selon la revendication 1 ou 3, dans lequel la quantité physique de freinage comprend : une force appliquée à une pédale de frein, une course de la pédale de frein ou une pression de freinage.

6. Dispositif pour commander la fonction de stationnement automatique, comprenant : un module d'enregistrement (10), configuré pour enregistrer un moment stationnaire du véhicule lorsque le véhicule est stationnaire basé sur une action de freinage ; enregistrer un moment de récurrence de l'action de freinage, lorsque l'action de freinage est détectée à nouveau dans le cas où une pression de freinage est maintenue au-dessus d'une pression de freinage prédéfinie ;
un module de détermination (20), configuré pour déterminer un seuil d'activation selon une différence de temps entre le moment de récurrence de l'action de freinage et le moment stationnaire du véhicule, la différence de temps étant inversement proportionnelle au seuil d'activation ; et
un module de commande (30), configuré pour activer la fonction de stationnement automatique lorsqu'il est détecté qu'un incrément d'une quantité physique de freinage est supérieur au seuil d'activation dans une durée prédéfinie.

7. Dispositif de commande de la fonction de stationnement automatique selon la revendication 6, dans lequel le module de commande est en outre configuré pour : désactiver la fonction de stationnement automatique lorsqu'une condition de désactivation est remplie.

8. Dispositif de commande de la fonction de stationnement automatique selon la revendication 7, dans lequel la condition de désactivation comprend que : une quantité physique d'accélération est supérieure à un premier seuil ; ou une quantité physique de freinage est supérieure à un deuxième seuil.

9. Appareil pour commander la fonction de stationnement automatique, comprenant le dispositif pour commander la fonction de stationnement automatique selon l'une des revendications 6 à 8, comprenant en outre un processeur (1001), une mémoire (1005) et un programme pour commander la fonction de stationnement automatique stockée sur la mémoire (1005) et exécutable par le processeur (1001), dans lequel le programme de commande de la fonction de stationnement automatique, lorsqu'il est exécuté par le processeur (1001), met en œuvre les fonctions du dispositif pour commander la fonction de stationnement automatique.

10. Support de stockage lisible, un programme pour commander la fonction de stationnement automatique étant stocké sur le support de stockage lisible, dans lequel le programme de commande de la fonction de stationnement automatique, lorsqu'il est exécuté par un processeur (1001), met en œuvre les étapes du procédé de commande de la fonction de stationnement automatique selon l'une des revendications 1 à 5.
